# EUROPÄISCHE PATENTSCHRIFT

(11) **EP 4 052 026 B1**
(45) Veröffentlichungstag und Bekanntmachung des Hinweises auf die Patenterteilung: **24.06.2026**
(21) Anmeldenummer: 20800571.0
(22) Anmeldetag: 26.10.2020
(51) Int. Cl.: G01N 27/406, G01N 27/419

(54) **ELEKTRONISCHE STEUERUNGSEINHEIT ZUM BETREIBEN EINES SENSORS ZUR ERFASSUNG MINDESTENS EINER EIGENSCHAFT EINES MESSGASES**
ELECTRONIC CONTROL UNIT FOR DRIVING A PROBE FOR MEASURING AT LEAST A PROPERTY OF A MEASURING GAS
UNITE ELECTRONIQUE DE CONTROLE POUR FAIRE FONCTIONNER UN CAPTEUR DE MESURE D'AU MOINS UNE PROPRIETE D'UN GAS A MESURER

(30) Priorität: 31.10.2019 DE 102019216881
(43) Veröffentlichungstag der Anmeldung: 07.09.2022
(73) Patentinhaber: Robert Bosch GmbH, 70442 Stuttgart (DE)
(72) Erfinder: LEDERMANN, Bernhard, 71263 Weil Der Stadt (DE); BEVOT, Claudius, 70197 Stuttgart (DE); MEZGER, Florian, 70565 Stuttgart (DE); KNEER, Andreas, 73257 Koengen (DE); AUE, Axel, 70825 Korntal-Muenchingen (DE); TREFFON, Thorsten, 70192 Stuttgart (DE); ZOBEL, Tobias-Gerhard, 70469 Stuttgart (DE); CHAUVET, Yannick, 70563 Stuttgart (DE)
(86) Internationale Anmeldenummer: PCT/EP2020/079994
(87) Internationale Veröffentlichungsnummer: WO 2021/083820

(56) Entgegenhaltungen:
- DE-A1- 102007 043 728
- DE-A1- 102011 075 572
- DE-A1- 102013 224 811
- DE-A1- 19 836 129
- US-A1- 2001 020 587
- US-A1- 2001 023 386
- US-A1- 2013 327 124
- US-A1- 2014 238 973
- ANONYMOUS: "L9780 - Wide range air fuel sensor control interface", 1 November 2014 (2014-11-01), XP055738289, Retrieved from the Internet <URL:https://www.st.com/resource/en/datasheet/l9780.pdf> [retrieved on 20201009]

## Beschreibung

### Stand der Technik

Aus dem Stand der Technik ist eine Vielzahl von Sensoren und Verfahren zur Erfassung mindestens einer Eigenschaft eines Messgases in einem Messgasraum bekannt. Dabei kann es sich grundsätzlich um beliebige physikalische und/oder chemische Eigenschaften des Messgases handeln, wobei eine oder mehrere Eigenschaften erfasst werden können. Die Erfindung wird im Folgenden insbesondere unter Bezugnahme auf eine qualitative und/oder quantitative Erfassung eines Anteils einer Gaskomponente des Messgases beschrieben, insbesondere unter Bezugnahme auf eine Erfassung eines Sauerstoffanteils in dem Messgasteil. Der Sauerstoffanteil kann beispielsweise in Form eines Partialdrucks und/oder in Form eines Prozentsatzes erfasst werden. Alternativ oder zusätzlich sind jedoch auch andere Eigenschaften des Messgases erfassbar, wie beispielsweise die Temperatur.

Aus dem Stand der Technik sind insbesondere Sensoren mit keramischen Sensorelementen bekannt, welche auf der Verwendung von elektrolytischen Eigenschaften bestimmter Festkörper basieren, also auf Ionen leitenden Eigenschaften dieser Festkörper. Insbesondere kann es sich bei diesen Festkörpern um keramische Festelektrolyte handeln, wie beispielsweise Zirkoniumdioxid (ZrO₂), insbesondere yttriumstabilisiertes Zirkoniumdioxid (YSZ) und scandiumdotiertes Zirkoniumdioxid (ScSZ), die geringe Zusätze an Aluminiumoxid (Al₂O₃) und/oder Siliziumoxid (SiO₂) enthalten können.

Beispielsweise können derartige Sensoren als so genannte Lambdasonden ausgestaltet sein, wie sie beispielsweise aus Konrad Reif (Hrsg.): Sensoren im Kraftfahrzeug, 1. Auflage 2010, S. 160-165, bekannt sind. Mit Breitband-Lambdasonden, insbesondere mit planaren Breitband-Lambdasonden, kann beispielsweise die Sauerstoffkonzentration im Abgas in einem großen Bereich bestimmt und damit auf das Luft-Kraftstoff-Verhältnis im Brennraum geschlossen werden. Die Luftzahl λ beschreibt dieses Luft-Kraftstoff-Verhältnis.

Die Breitband-Lambdasonde misst die Sauerstoffkonzentration oder die Konzentration von Reduktionsmittel in einem Messgas. Für den emissionsoptimalen Betrieb eines Verbrennungsmotors ist die Information des Restsauerstoffes im Abgas von hoher Bedeutung. Für den Betrieb einer Breitband-Lambdasonde wird diese an einen speziell für diesen Zweck erstellten Auswertebaustein (ASIC) eines Steuergeräts angeschlossen. Die Hauptaufgabe des ASICs ist es, die Nernstspannung, gemessen zwischen der Referenzelektrode und der inneren Pumpelektrode, auf einen gewissen Zielwert, meistens 450 mV, einzuregeln. Die Stellgröße mit der die Nernstspannung eingeregelt werden soll, ist der Pumpstrom, der vom ASIC zwischen der äußeren Pumpelektrode und der inneren Pumpelektrode getrieben werden muss. Wenn die Nernstspannung nahe an ihrem Zielwert liegt, ist der dafür nötige Pumpstrom ein Maß für die Sauerstoffkonzentration im Abgas. Eine genaue Bestimmung des Pumpstroms ist daher die unumgängliche Voraussetzung für eine genaue Bestimmung der O₂-Konzentration im Abgas.

Die Pumpstromquelle nimmt vom Nernstspannungsregler einen digitalen Soll-Pumpstrom Wert entgegen und soll diesen dann durch die Sonde treiben. Eine Stromquelle, die einen kontinuierlichen, einstellbaren Strom treibt, wird auch DAC Stromquelle genannt.

Trotz der Vorteile der aus dem Stand der Technik bekannten Sensoren und Verfahren zum Betreiben derselben, beinhalten diese noch Verbesserungspotenzial. Verschiedene Breitband-Lambdasonden stellen sehr unterschiedliche Regelstrecken dar, die einen jeweils darauf angepassten Nernstspannungsregler benötigen. Dabei ist sowohl eine Anpassung der Reglerparameter, als auch eine Anpassung der Reglerstruktur notwendig. Die Nernstspannungsregler sind dabei in heutigen ASICs fest in dessen Hardware implementiert. Eine Änderung der Reglerstruktur bedeutet eine Überarbeitung des ASICs durch Anfertigung einer neuen Maske. Es ist nur möglich die Reglerparameter via Software anzupassen. Eine Anpassung der Reglerstruktur inklusive der Auflösung ist nur durch eine Hardwareüberarbeitung möglich. Eine derartige Überarbeitung ist aufwändig und teuer.

Weiterhin sind elektronische Steuerungseinheit zum Betreiben eines Sensors bekannt aus der DE 198 36 129 A1, der US 2001/023386 A1, der US 2001/020587 A1. Der DE 10 2007 043 728 A1, der DE 10 2011 075 572 A1, der DE 10 2013 224 811 A1 und der US 2014/238 973 A1.

### Offenbarung der Erfindung

Es wird daher eine elektronische Steuerungseinheit zum Betreiben eines Sensors zur Erfassung mindestens einer Eigenschaft eines Messgases in einem Messgasraum vorgeschlagen, welches die Nachteile bekannter Ansteuerungs- und Auswerteschaltungen zumindest weitgehend vermeidet und bei der eine schnelle und kostengünstige Anpassung der Reglerstruktur des Nernstspannungsreglers ermöglicht wird, wie beispielsweise eine Anpassung an verschiedene Sonden.

Die erfindungsgemäße elektronische Steuerungseinheit zum Betreiben eines Sensors zur Erfassung mindestens einer Eigenschaft eines Messgases in einem Messgasraum, der ein Sensorelement zur Erfassung der Eigenschaft des Messgases aufweist, wobei das Sensorelement einen Festelektrolyten, mindestens eine Pumpzelle und mindestens eine Nernstzelle aufweist, umfasst eine Ansteuerungs- und Auswerteschaltung und einen Mikrocontroller. Der Mikrocontroller ist mit der Auswerteschaltung verbunden. Der Mikrocontroller weist weiterhin einen Nernstspannungsregler zum Regeln einer Nernstspannung der Nernstzelle auf.

Entsprechend wird eine Verlagerung des Nernstspannungsreglers von einer Ansteuerungs- und Auswerteschaltung, wie beispielsweise ASIC, in den Mikrocontroller vorgeschlagen. Änderung der Reglerstruktur und Wortbreiten sind dabei kostengünstig und schnell möglich. Es wird keine Hardwareüberarbeitung benötigt. Dies erlaubt eine Einsparung von Ressourcen im ASIC. Im ASIC wird kein Rechenwerk benötigt, da die Ressourcen des Mikrocontrollers für Berechnungen des Reglers genutzt werden. Außerdem ist eine einfachere Gesamtstruktur des ASICs möglich.

Insbesondere kann der Nernstspannungsregler in einer Software des Mikrocontrollers implementiert sein. Eine Änderung der Reglerstruktur und Wortbreiten sind dabei durch Anpassung der Software kostengünstig und schnell möglich. Es wird keine Hardwareüberarbeitung benötigt.

Die Ansteuerungs- und Auswerteschaltung ist erfindungsgemäß ein ASIC. ASIC (englisch application-specific integrated circuit = anwendungsspezifische integrierte Schaltung) ist eine elektronische Schaltung, die als integrierter Schaltkreis realisiert wird. Die Funktion eines ASICs ist damit nicht mehr veränderbar, die Herstellungskosten sind dafür geringer bei hohen Einmalkosten. Dabei lässt sich eine Verringerung des Rechenbedarfs im ASIC realisieren, der somit kleiner ausfällt. Die entsprechend benötigte Silizium-Fläche für das Rechenwerk im Mikrocontroller ist deutlich kleiner und damit preiswerter, da der Halbleiterprozess des Mikrocontrollers für digitale Strukturen optimiert werden kann.

Eine Eingangsgröße des Nernstspannungsreglers kann eine Nernstspannung der Nernstzelle sein, wobei eine Ausgangsgröße des Nernstspannungsreglers ein Pumpstrom für die Pumpzelle sein kann. Der Regelalgorithmus wird somit in dem Mikrocontroller berechnet. Der Ausgangswert des Reglers ist mit sehr geringen Latenzzeiten im Mikrocontroller verfügbar. Dieser Wert ist die Stellgröße für die Pumpstromquelle, welche das Hauptsignal einer Breitbandlambdasonde ist. Daraus wird das Lambda-Signal berechnet, welches somit ohne bzw. mit sehr geringen Latenzzeiten im Mikrocontroller verfügbar ist. Somit ist auch bei hoher Fahrdynamik noch eine präzise Lambdaregelung möglich was insbesondere bei Real Driving Emissions Vorteile bietet.

Die elektronische Steuerungseinheit kann weiterhin einen Analog-Digital-Wandler umfassen, der zum Erfassen einer Nernstspannung der Nernstzelle ausgebildet ist. Damit lässt sich die Eingangsgröße für den Nernstspannungsregler in einfacher Weise als digitale Größe darstellen.

Die Ansteuerungs- und Auswerteschaltung kann den Analog-Digital-Wandler aufweisen, wobei der Mikrocontroller eine Datenschnittstelle aufweist, wobei die erfasste Nernstspannung mittels der Datenschnittstelle an den Mikrocontroller übertragbar ist. Bei diesem Ausführungsbeispiel befindet sich der Analog-Digital-Wandler im Interface-ASIC. Die Spannungswerte werden im ASIC erfasst und über eine Datenschnittstelle an den Mikrocontroller übertragen.

Alternativ kann der Mikrocontroller den Analog-Digital-Wandler aufweisen. Die Spannungswerte werden somit direkt im Mikrocontroller erfasst und sind somit direkt im Mikrocontroller verfügbar.

Eine Ausgangsgröße des Nernstspannungsreglers kann einen Sauerstoffgehalt in dem Messgas angeben. Der Ausgangswert des Reglers ist somit direkt im Mikrocontroller verfügbar. Dieser Wert entspricht dem Sauerstoffgehalt im Messgas, wie beispielsweise Abgas, und wird für die Lambdaregelung benötigt. Ist dieser mit einer geringeren Latenz verfügbar, kann auch noch bei hohen Fahrdynamiken der gewünschte Lambda-Wert eingeregelt werden und somit geringere Emissionen ermöglicht werden.

Die Ansteuerungs- und Auswerteschaltung weist erfindungsgemäß einen Digital-Analog-Wandler auf, wobei eine Ausgangsgröße des Nernstspannungsreglers dem Digital-Analog-Wandler zuführbar ist. Somit wird die digitale Ausgangsgröße in eine analoge Größe umgewandelt, um den Pumpstrom an der Pumpstromquelle einzustellen.

Eine Reglerstruktur des Nernstspannungsreglers kann mittels einer Anpassung eines Quellcodes des Nernstspannungsreglers veränderbar sein. Wird der Regler im Mikrocontroller realisiert, kann er jederzeit durch Anpassung des Quelltextes an neue Anforderungen angepasst werden. So lässt sich die Reglerstruktur an neue Anforderungen anpassen wie z.B. andere Wortbereiten, anderer Reglertyp.

Unter einem Festelektrolytkörper ist im Rahmen der vorliegenden Erfindung ein Körper oder Gegenstand mit elektrolytischen Eigenschaften, also mit ionenleitenden Eigenschaften, zu verstehen, beispielsweise sauerstoffionenleitenden Eigenschaften. Insbesondere kann es sich um einen keramischen Festelektrolyten handeln. Beispielsweise kann der Festelektrolytkörper stabilisiertes Zirkoniumdioxid und/oder scandiumstabilisiertes Zirkoniumdioxid aufweisen. Der Festelektrolytkörper kann auch aus mehreren Festelektrolytschichten ausgebildet sein. Unter einer Schicht ist dabei eine einheitliche Masse in flächenhafter Ausdehnung in einer gewissen Höhe zu verstehen, die über, unter oder zwischen anderen Elementen liegt.

Unter einer Elektrode ist im Rahmen der vorliegenden Erfindung allgemein ein Element zu verstehen, welches in der Lage ist, den Festelektrolyten derart zu kontaktieren, dass durch den Festelektrolyten und die Elektrode ein Strom aufrechterhalten oder eine Spannung gemessen werden kann. Dementsprechend kann die Elektrode ein Element umfassen, an welchem die Ionen in den Festelektrolyten eingebaut und/oder aus dem Festelektrolyten ausgebaut werden können. Typischerweise umfassen die Elektroden eine Edelmetallelektrode, welche beispielsweise als Metallkeramikelektrode auf dem Festelektrolyten aufgebracht sein kann oder auf andere Weise mit dem Festelektrolyten in Verbindung stehen kann. Typische Elektrodenmaterialien sind Platincermet-Elektroden. Auch andere Edelmetalle, wie beispielsweise Gold oder Palladium, sind jedoch grundsätzlich einsetzbar.

Unter einer Nernstzelle ist im Rahmen der vorliegenden Erfindung eine elektrochemische Messzelle zu verstehen, die einen Festelektrolyten als Membran zwischen zwei Elektroden verwendet. Dabei nutzt man die Eigenschaft des Festelektrolyten, ab einer bestimmten Temperatur Ionen des zu messenden Messgases, wie beispielsweise Sauerstoffionen, elektrolytisch von der einen Elektrode zu der anderen transportieren zu können, wodurch eine sogenannte Nernstspannung entsteht. Durch diese Eigenschaft lässt sich der Unterschied des Partialdrucks des Messgases auf den verschiedenen Seiten der Membran bestimmen. Bei der Lambdasonde wird eine Seite der Membran dem Messgas ausgesetzt, während die andere Seite an einer Referenz liegt.

Unter einer Pumpzelle ist im Rahmen der vorliegenden Erfindung eine elektrochemische Zelle zu verstehen, bei der ein Gehalt einer Komponente des Messgases, wie beispielsweise Sauerstoff, in einem Messspalt einerseits über das Messgas, das durch einen Diffusionskanal einwirkt, bestimmt und andererseits durch den Stromfluss der Pumpzelle beeinflusst wird. Durch den Pumpstrom wird je nach Polarität Messgas von der Messgasseite der Festelektrolyt-Membran in den Messspalt gepumpt bzw. aus diesem herausbefördert. Dabei wird der Pumpstrom durch einen äußeren Regler so geregelt, dass der Lambdawert im Messgas den Messgasstrom durch den Diffusionskanal genau ausgleicht und das Messgas im Messspalt konstant bei einem vorbestimmten Wert wie beispielsweise λ = 1 hält. Ein Lambdawert von 1 im Messspalt ist beispielsweise immer dann gegeben, wenn die Spannung an der Nernstzelle 0,45 V beträgt. Der Pumpstrom pumpt bei fettem Gemisch Messgasionen in das Messgas im Messspalt hinein, bei magerem Gemisch heraus.

Unter einem Mikrocontroller ist im Rahmen der vorliegenden Erfindung ein Halbleiterchip zu verstehen, der einen Prozessor und zugleich auch Peripheriefunktionen enthält. In vielen Fällen befindet sich auch der Arbeits- und Programmspeicher teilweise oder komplett auf demselben Chip. Ein Mikrocontroller ist ein Ein-Chip-Computersystem. Für manche Mikrocontroller wird auch der Begriff System-on-a-Chip oder SoC verwendet. Auf modernen Mikrocontrollern finden sich häufig auch komplexe Peripheriefunktionen wie z. B. CAN- (Controller Area Network), LIN- (Local Interconnect Network), USB-(Universal Serial Bus), I²C- (Inter-Integrated Circuit), SPI- (Serial Peripheral Interface), serielle oder Ethernet-Schnittstellen, PWM-Ausgänge, LCD-Controller und -Treiber sowie Analog-Digital-Umsetzer. Einige Mikrocontroller verfügen auch über programmierbare digitale und/oder analoge bzw. hybride Funktionsblöcke.

Unter einem Multiplexer ist im Rahmen der vorliegenden Erfindung eine Selektionsschaltung in der analogen und digitalen Elektronik zu verstehen, mit der aus einer Anzahl von Eingangssignalen eines ausgewählt und an den Ausgang durchgeschaltet werden kann. Multiplexer sind vergleichbar mit Drehschaltern, die nicht von Hand, sondern mit elektronischen Signalen gestellt werden. Der Unterschied zum Relais besteht darin, dass die Verbindungen nicht mechanisch, sondern (heutzutage) durch integrierte Halbleiterschaltungen zustande kommen.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
Figur 1 eine elektronische Steuerungseinheit gemäß einer ersten Ausführungsform der vorliegenden Erfindung und
Figur 2 eine elektronische Steuerungseinheit gemäß einer zweiten Ausführungsform der vorliegenden Erfindung.

### Ausführungsformen der Erfindung

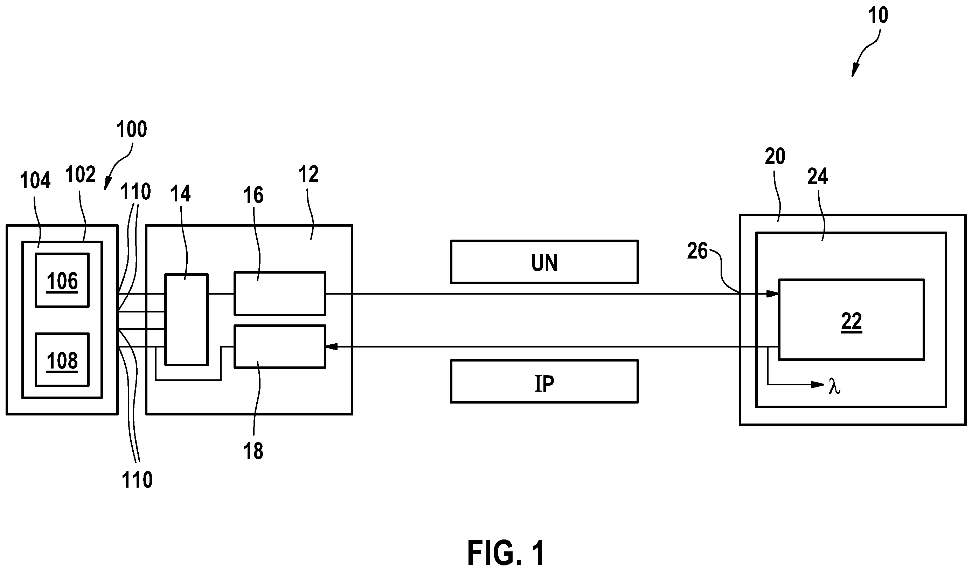

Figur 1 zeigt eine elektronische Steuerungseinheit 10 gemäß einer ersten Ausführungsform der vorliegenden Erfindung. Die elektronische Steuerungseinheit 10 ist ausgebildet zum Betreiben eines Sensors 100 zur Erfassung mindestens einer Eigenschaft eines Messgases in einem Messgasraum, insbesondere zur Erfassung eines Anteils einer Gaskomponente in dem Messgas oder einer Temperatur des Messgases. Der Sensor 100 weist ein Sensorelement 102 auf. Das in Figur 1 dargestellte Sensorelement 102 kann zum Nachweis von physikalischen und/oder chemischen Eigenschaften eines Messgases verwendet werden, wobei eine oder mehrere Eigenschaften erfasst werden können. Die Erfindung wird im Folgenden insbesondere unter Bezugnahme auf eine qualitative und/oder quantitative Erfassung einer Gaskomponente des Messgases beschrieben, insbesondere unter Bezugnahme auf eine Erfassung eines Sauerstoffanteils in dem Messgas. Der Sauerstoffanteil kann beispielsweise in Form eines Partialdrucks und/oder in Form eines Prozentsatzes erfasst werden. Grundsätzlich sind jedoch auch andere Arten von Gaskomponenten erfassbar, wie beispielsweise Stickoxide, Kohlenwasserstoffe und/oder Wasserstoff. Alternativ und/oder zusätzlich sind jedoch auch andere Eigenschaften des Messgases erfassbar. Die Erfindung ist insbesondere im Bereich der Kraftfahrzeugtechnik einsetzbar, sodass es sich bei dem Messgasraum insbesondere um einen Abgastrakt einer Brennkraftmaschine handeln kann und bei dem Messgas insbesondere um ein Abgas.

Das Sensorelement 102 umfasst einen Festelektrolytkörper bzw. Festelektrolyten 104, eine Pumpzelle 106 und eine Nernstzelle 108. Über Pins 110 ist das Sensorelement elektrisch kontaktierbar. Der Sensor 100 ist lediglich beispielhaft als Breitband-Lambdasonde ausgebildet, so dass bezüglich deren Betriebsweise und näheren Aufbau auf den oben genannten Stand der Technik verwiesen werden kann, insbesondere Konrad Reif (Hrsg.): Sensoren im Kraftfahrzeug, 1. Auflage 2010, Seiten 160-165.

Die elektronische Steuerungseinheit 10 umfasst eine Ansteuerungs- und Auswerteschaltung 12. Die Ansteuerungs- und Auswerteschaltung 12 ist ein ASIC. Die Ansteuerungs- und Auswerteschaltung 12 ist mit den Pins 110 des Sensorelements 102 verbindbar. Beispielsweise umfasst die Ansteuerungs- und Auswerteschaltung 12 einen Multiplexer 14, der mit den Pins 110 elektrisch kontaktiert ist. Die Ansteuerungs- und Auswerteschaltung 12 umfasst weiterhin einen Analog-Digital-Wandler 16, der mit dem Multiplexer verbunden ist. Der Analog-Digital-Wandler 16 ist zum Erfassen einer Nernstspannung U_{N} der Nernstzelle 108 ausgebildet. Die Ansteuerungs- und Auswerteschaltung 12 umfasst weiterhin einen Digital-Analog-Wandler 18, der mit dem Ausgang des Multiplexers 14 bzw. mindestens einem der Pins 110 verbunden ist.

Die elektronische Steuerungseinheit 10 umfasst weiterhin einen Mikrocontroller 20. Der Mikrocontroller 20 ist mit der Ansteuerungs- und Auswerteschaltung 12 verbunden bzw. kommuniziert mit dieser. Der Mikrocontroller 20 umfasst einen Nernstspannungsregler 22 zum Regeln einer Nernstspannung der Nernstzelle 108. Der Nernstspannungsregler 22 ist in einer Software 24 des Mikrocontrollers implementiert. Wie in Figur 1 gezeigt ist eine Eingangsgröße des Nernstspannungsreglers eine Nernstspannung U_{N} der Nernstzelle 108. Eine Ausgangsgröße des Nernstspannungsreglers 108 ist ein Pumpstrom I_{P} für die Pumpzelle 106. Wie weiter in Figur 1 zu erkennen ist, gibt die Ausgangsgröße des Nernstspannungsreglers 22 einen Sauerstoffgehalt in dem Messgas an, beispielsweise in Form des Lambdawerts λ. Die Ausgangsgröße des Nernstspannungsreglers 22 ist dem Digital-Analog-Wandler 18 zuführbar. Der Mikrocontroller 20 weist eine Datenschnittstelle 26 auf, mittels der die Nernstspannung U_{N} als Messsignal an den Mikrocontroller 20 übertragbar ist. Da der Nernstspannungsregler 22 im Vergleich zu herkömmlichen Steuereinheiten nicht im ASIC implementiert ist, sondern im Mikrocontroller 20 bzw. dessen Software 24, ist eine Reglerstruktur des Nernstspannungsreglers 22 mittels einer Anpassung eines Quellcodes des Nernstspannungsreglers 22 veränderbar.

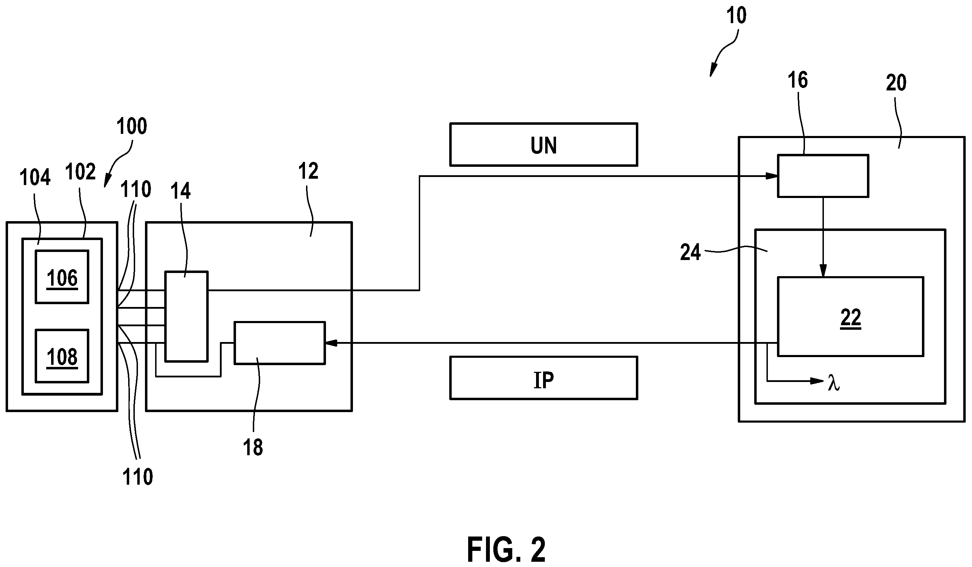

Figur 2 zeigt eine elektronische Steuerungseinheit 10 gemäß einer zweiten Ausführungsform der vorliegenden Erfindung. Nachstehend werden lediglich die Unterschiede zu der ersten Ausführungsform beschrieben und gleiche oder vergleichbare Bauteile sind mit gleichen Bezugszeichen versehen. Bei der elektronischen Steuerungseinheit 10 der zweiten Ausführungsform weist der Mikrocontroller 20 den Analog-Digital-Wandler 16 auf. Somit werden die Nernstspannungswerte direkt im Mikrocontroller 20 erfasst und sind somit direkt im Mikrocontroller 20 verfügbar.

Die erfindungsgemäße elektronische Steuerungseinheit ist indirekt nachweisbar. Beispielsweise kann eine Analyse der Größe des Digitalteils des ASICs erfolgen. Ein Nernstspannungsreglerauf dem ASIC benötigt einen Digitalteil mit einer bestimmten Größe. Falls der Digitalteil auf dem ASIC zu klein ist, muss der Nernstspannungsregler im Mikrocontroller verortet sein. Bei der zweiten Ausführungsform erfolgt eine Übertragung der Nernstspannung analog zum Mikrocontroller oder digital mit entsprechend hoher Frequenz. Bei beiden Ausführungsformen erfolgt eine Übertragung durch entsprechend hochfrequente Übertragung des Stellwertes I_{P}.

## Patentansprüche

1. Elektronische Steuerungseinheit (10) zum Betreiben eines Sensors (100) zur Erfassung mindestens einer Eigenschaft eines Messgases in einem Messgasraum, insbesondere zur Erfassung eines Anteils einer Gaskomponente in dem Messgas oder einer Temperatur des Messgases, wobei der Sensor (100) ein Sensorelement (102) aufweist, wobei das Sensorelement (102) einen Festelektrolyten (104), mindestens eine Pumpzelle (106) und mindestens eine Nernstzelle (108) aufweist, wobei die Steuerungseinheit (10) eine Ansteuerungs- und Auswerteschaltung (12) und einen Mikrocontroller (20) aufweist, wobei der Mikrocontroller (20) mit der Ansteuerungs- und Auswerteschaltung (12) verbunden ist, wobei der Mikrocontroller (20) weiterhin einen Nernstspannungsregler (22) zum Regeln einer Nernstspannung (U_{N}) der Nernstzelle (108) aufweist,
**dadurch gekennzeichnet, dass**
die Ansteuerungs- und Auswerteschaltung (12) ein ASIC ist und dass die Ansteuerungs- und Auswerteschaltung (12) einen Digital-Analog-Wandler (18) aufweist, wobei eine Ausgangsgröße des Nernstspannungsreglers (22) dem Digital-Analog-Wandler (18) zuführbar ist.

2. Elektronische Steuerungseinheit (10) nach dem vorhergehenden Anspruch, wobei der Nernstspannungsregler (22) in einer Software (24) des Mikrocontrollers (20) implementiert ist.

3. Elektronische Steuerungseinheit (10) nach einem der vorhergehenden Ansprüche, wobei eine Eingangsgröße des Nernstspannungsreglers (22) eine Nernstspannung (U_{N}) der Nernstzelle (108) ist, wobei eine Ausgangsgröße des Nernstspannungsreglers (22) ein Pumpstrom (I_{P}) für die Pumpzelle (106) ist.

4. Elektronische Steuerungseinheit (10) nach einem der vorhergehenden Ansprüche, weiterhin umfassend einen Analog-Digital-Wandler (16), der zum Erfassen einer Nernstspannung (U_{N}) der Nernstzelle (108) ausgebildet ist.

5. Elektronische Steuerungseinheit (10) nach dem vorhergehenden Anspruch, wobei die Ansteuerungs- und Auswerteschaltung (12) den Analog-Digital-Wandler (16) aufweist, wobei der Mikrocontroller (20) eine Datenschnittstelle (26) aufweist, wobei die erfasste Nernstspannung (U_{N}) mittels der Datenschnittstelle (26) an den Mikrocontroller (20) übertragbar ist.

6. Elektronische Steuerungseinheit (10) nach Anspruch 5, wobei der Mikrocontroller (20) den Analog-Digital-Wandler (16) aufweist.

7. Elektronische Steuerungseinheit (10) nach einem der vorhergehenden Ansprüche, wobei eine Reglerstruktur des Nernstspannungsreglers (22) mittels einer Anpassung eines Quellcodes des Nernstspannungsreglers (22) veränderbar ist.

## Claims

1. Electronic control unit (10) for operating a sensor (100) for capturing at least one property of a measurement gas in a measurement gas space, in particular for capturing a proportion of a gas component in the measurement gas or a temperature of the measurement gas, wherein the sensor (100) has a sensor element (102), wherein the sensor element (102) has a solid electrolyte (104), at least one pump cell (106) and at least one Nernst cell (108), wherein the control unit (10) has a drive and evaluation circuit (12) and a microcontroller (20), wherein the microcontroller (20) is connected to the drive and evaluation circuit (12), wherein the microcontroller (20) furthermore has a Nernst voltage regulator (22) for regulating a Nernst voltage (U_{N}) of the Nernst cell (108), **characterized in that** the drive and evaluation circuit (12) is an ASIC, and **in that** the drive and evaluation circuit (12) has a digital-to-analogue converter (18), wherein an output variable of the Nernst voltage regulator (22) can be supplied to the digital-to-analogue converter (18).

2. Electronic control unit (10) according to the preceding claim, wherein the Nernst voltage regulator (22) is implemented in software (24) of the microcontroller (20).

3. Electronic control unit (10) according to one of the preceding claims, wherein an input variable of the Nernst voltage regulator (22) is a Nernst voltage (U_{N}) of the Nernst cell (108), wherein an output variable of the Nernst voltage regulator (22) is a pump current (I_{P}) for the pump cell (106).

4. Electronic control unit (10) according to one of the preceding claims, further comprising an analogue-to-digital converter (16) which is designed to capture a Nernst voltage (U_{N}) of the Nernst cell (108).

5. Electronic control unit (10) according to the preceding claim, wherein the drive and evaluation circuit (12) has the analogue-to-digital converter (16), wherein the microcontroller (20) has a data interface (26), wherein the captured Nernst voltage (U_{N}) can be transmitted to the microcontroller (20) by means of the data interface (26).

6. Electronic control unit (10) according to Claim 5, wherein the microcontroller (20) has the analogue-to-digital converter (16).

7. Electronic control unit (10) according to one of the preceding claims, wherein a regulator structure of the Nernst voltage regulator (22) can be changed by adapting a source code of the Nernst voltage regulator (22).

## Revendications

1. Unité de commande électronique (10) destinée à faire fonctionner un capteur (100) pour détecter au moins une propriété d'un gaz à mesurer dans une chambre de gaz de mesure, en particulier pour détecter une proportion d'un composant gazeux dans le gaz à mesurer ou une température du gaz à mesurer, le capteur (100) comportant un élément de détection (102), l'élément de détection (102) comportant un électrolyte solide (104), au moins une cellule de pompage (106) et au moins une cellule de Nernst (108), l'unité de commande (10) comportant un circuit de pilotage et d'évaluation (12) et un microcontrôleur (20), le microcontrôleur (20) étant relié au circuit de pilotage et d'évaluation (12), le microcontrôleur (20) comportant par ailleurs un régulateur de tension de Nernst (22) pour réguler une tension de Nernst (U_{N}) de la cellule de Nernst (108), **caractérisée en ce que** le circuit de pilotage et d'évaluation (12) est un ASIC et que le circuit de pilotage et d'évaluation (12) comporte un convertisseur numérique-analogique (18), une variable de sortie du régulateur de tension de Nernst (22) pouvant être amenée au convertisseur numérique-analogique (18).

2. Unité de commande électronique (10) selon la revendication précédente, le régulateur de tension de Nernst (22) étant implémenté dans un logiciel (24) du microcontrôleur (20).

3. Unité de commande électronique (10) selon l'une des revendications précédentes, une variable d'entrée du régulateur de tension de Nernst (22) étant une tension de Nernst (U_{N}) de la cellule de Nernst (108), une variable de sortie du régulateur de tension de Nernst (22) étant un courant de pompage (I_{P}) pour la cellule de pompage (106).

4. Unité de commande électronique (10) selon l'une des revendications précédentes, comprenant par ailleurs un convertisseur analogique-numérique (16), qui est formé pour détecter une tension de Nernst (U_{N}) de la cellule de Nernst (108).

5. Unité de commande électronique (10) selon la revendication précédente, le circuit de pilotage et d'évaluation (12) comportant le convertisseur analogique-numérique (16), le microcontrôleur (20) comportant une interface de données (26), la tension de Nernst (U_{N}) détectée pouvant être transmise au microcontrôleur (20) au moyen de l'interface de données (26).

6. Unité de commande électronique (10) selon la revendication 5, le microcontrôleur (20) comportant le convertisseur analogique-numérique (16).

7. Unité de commande électronique (10) selon l'une des revendications précédentes, une structure de régulateur du régulateur de tension de Nernst (22) pouvant être modifiée au moyen d'une adaptation d'un code source du régulateur de tension de Nernst (22).
